**Europäisches Patentamt**

**European Patent Office**

**Office européen des brevets**

(11) Veröffentlichungsnummer: **0 234 237 B1**

(19)

(12) **EUROPÄISCHE PATENTSCHRIFT**

(45) Veröffentlichungstag der Patentschrift: **27.03.91**

(51) Int. Cl.⁵: **G05D 1/06, F41G 7/34**

(21) Anmeldenummer: **87100562.5**

(22) Anmeldetag: **17.01.87**

(54) **Tiefflugverfahren zur automatischen Kursbestimmung.**

(30) Priorität: **12.02.86 DE 3604401**

(43) Veröffentlichungstag der Anmeldung:
**02.09.87 Patentblatt 87/36**

(45) Bekanntmachung des Hinweises auf die
Patenterteilung:
**27.03.91 Patentblatt 91/13**

(84) Benannte Vertragsstaaten:
**DE FR GB IT**

(56) Entgegenhaltungen:
**DE-A- 3 434 632**
**GB-A- 2 060 306**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **Feuerstein, Dieter W.
Savitsstrasse 24
W-8000 München 81(DE)**
Erfinder: **Bernhard, Otto
Nockherweg 14
W-8018 Grafing(DE)**

## Beschreibung

Die Erfindung betrifft ein Tiefflugverfahren unter Verwendung eines Geländespeichers sowie eine zugehörige Vorrichtung gemäß den Oberbegriffen der Patentansprüche 1 bzw. 8.

Hierzu ist aus der GB-A-2 060 306 ein Navigationssystem für ein Flugzeug bekannt, bei welchem ein Geländespeicher verwendet wird, in dem rasterartig verteilte Geländepunkte des interessierenden Geländes mit ihnen zugeordneten Höhenkoordinaten digital abgespeichert sind. Die Daten dieses Geländespeichers dienen jedoch lediglich zur jeweiligen Positionsbestimmung des Flugzeuges. Dazu werden ständig Höhenmessungen über Grund vorgenommen und diese Meßwerte in einem Korrelator mit den entsprechenden Daten aus dem Geländespeicher verglichen. Dieses Navigationssystem ist jedoch nicht zur automatischen Kursbestimmung beim Anfliegen eines vorgegebenen Zielortes geeignet.

Modernen Kampfflugzeugen wird häufig die Aufgabe gestellt, von einem Startpunkt aus einen vorgegebenen Zielort möglichst automatisch anzufliegen, wobei dies so zu geschehen hat, daß möglichst keine Geländeerhebungen direkt überflogen werden, wo die Gefahr besteht, daß das Flugzeug leichter entdeckt wird bzw. in den Bereich gegnerischer Abwehrmaßnahmen gerät. Der optimale Flugweg folgt demnach dem Verlauf von Geländeeinschnitten, und das Flugzeug sollte nur dann gezwungen sein, erhöhte Geländeformationen direkt zu überfliegen, wenn keine seitlichen, niedriger gelegenen Ausweichmöglichkeiten vorhanden sind, so etwa bei längeren querliegenden Höhenrücken. Zusätzlich sollte ein solches Flugzeug möglichst wenig von einem weit vorausstrahlenden Radar Gebrauch machen, da es auch hierdurch leichter entdeckt werden kann.

Der Erfindung liegt daher die Aufgabe zugrunde, ein Tiefflugverfahren der eingangs genannten Art sowie eine zugehörige Vorrichtung bereitzustellen, mit denen der Kurs jeweils so bestimmt wird, daß das Überfliegen erhöhter Geländeformationen und damit das Risiko einer gegnerischen Bedrohung so weitgehend wie möglich vermieden wird.

Diese Aufgabe wird gemäß der Erfindung durch die in den kennzeichnenden Teilen der Patentansprüche 1 und 8 gegebenen Maßnahmen gelöst. Demnach ist zunächst ein Geländespeicher vorangesetzt, in den vor Flugbeginn das interessierende Gelände in Form von rasterartig verteilten Geländepunkten sowie der diesen zugeordneten Höhenkoordinaten digital abgespeichert wird. Die Erfindung ermöglicht es, auf der Basis dieses abgespeicherten digitalen Geländehöhenmodells einen Flugweg zwischen dem Startpunkt und dem Zielort zu finden, welcher den durch die Aufgabe gestellten Anforderungen genügt. Dies geschieht mit Hilfe der Daten des digitalen Geländehöhenmodells durch geeignete Auswahl und Verwertung dieser Daten mit Hilfe gewisser Hardware-Komponenten an Bord des Flugzeugs, kann aber auch als Simulation bereits vor Flugbeginn erfolgen.

Vorteilhafte Weiterbildungen der Erfindung sind in den Unteransprüchen gegeben.

Im folgenden wird die Erfindung anhand der Abbildung in einem Ausführungsbeispiel näher erläutert. Es zeigen in schematischer Weise:

Fig. 1 die an verschiedenen Orten des Flugweges über das digitale Geländehöhenmodell zu legenden Fächer,

Fig. 2 ein Blockschaltbild.

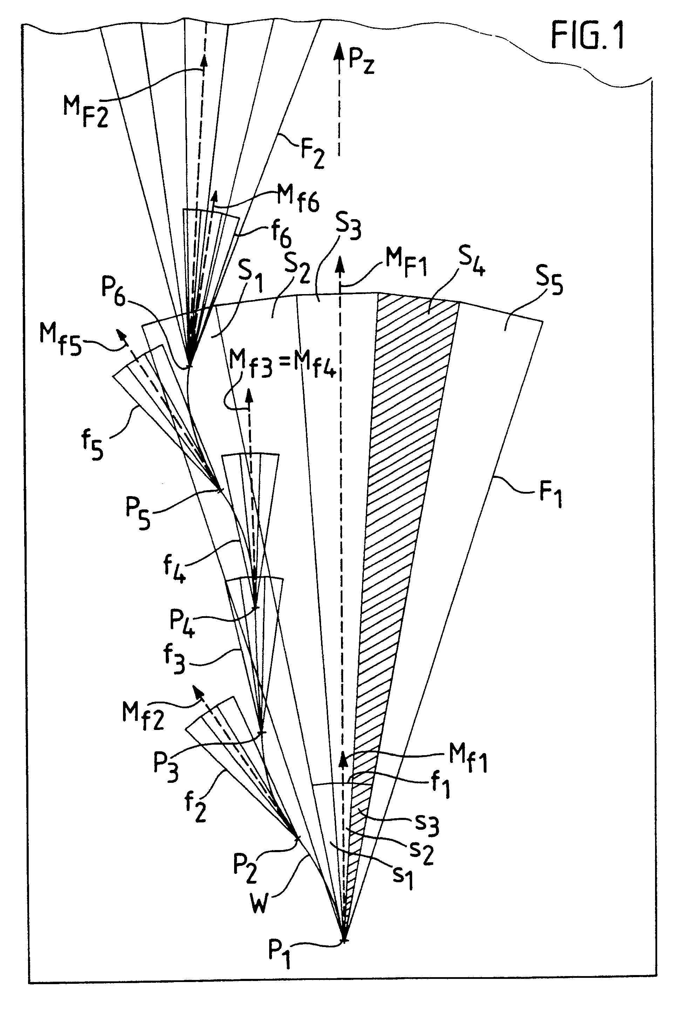

In Fig. 1 ist ein Teil eines rechteckigen Geländeausschnittes dargestellt. Am unteren Ende dieses Geländeausschnittes liegt in der Mitte der Startpunkt $P_1$ des Flugzeuges, und der Geländeausschnitt ist so gelegt, daß der Zielort $P_z$ in der oberen Fortsetzung ebenfalls in der Mitte liegt. Innerhalb des gesamten rechteckigen Geländeausschnittes ist ein Netz relativ dicht liegender Geländepunkte vorgegeben, deren Höhenkoordinaten bekannt sind. Diese Ortskoordinaten der Geländepunkte sind in digitaler Form (digitales Geländehöhenmodell) in einem Geländespeicher abgespeichert, der vom Flugzeug mitgeführt wird. Gleich zu Beginn des Fluges am Startpunkt $P_1$ wird von einem dem Geländespeicher nachgeschalteten Grobanalysator ein Fächer F, mit einem vorgegebenen Radius über die Punktmenge des digitalen Geländehöhenmodells gelegt. Dies bedeutet, daß der Grobanalysator aus der gesamten Punktmenge des rechteckigen Geländeausschnitts die Punkte auswählt, die innerhalb des Fächers $F_1$ liegen, wobei dessen Mittenrichtung $M_F$ auf den Zielort $P_z$ hin orientiert ist. Dieser erste Fächer $F_1$ ist in fünf Segmente $S_1$ bis $S_5$ unterteilt. Im Grobanalysator werden nun Rechenoperationen ausgeführt, um für jeden Sektor $S_i$ (1≤i≤5) die jeweiligen arithmetischen Mittelwerte der Höhenkoordinaten der in dem Sektor gelegenen Geländepunkte zu berechnen. Danach wird der Sektor mit dem geringsten Mittelwert bestimmt. Dies sei im vorliegenden Falle der Sektor $S_4$. Dieses Ergebnis wird zunächst im Grobanalysator festgehalten. Gleichzeitig wird zu Beginn des Fluges in einem Feinanalysator ein weiterer, zweiter Fächer $f_1$ mit geringerem Radius über die Punktmenge des digitalen Geländehöhenmodells gelegt, wobei die Mittenrichtung $M_{fl}$ dieses Fächers $f_1$ in die momentane Flugrichtung weist, welche zu Flugbeginn mit der Mittenrichtung $M_F$ des ersten Fächers $F_1$ übereinstimmt. Auch hier werden wie im analogen Falle des ersten Fächers $F_1$ alle innerhalb des zweiten Fächers $f_1$ gelegenen Geländepunkte mit ihren Höhenkoordinaten ausgewählt, und in einer folgenden Rechenoperation werden wiederum die arithmetischen Mittelwerte der Höhenkoordinaten der in jedem der Sektoren $s_j(1j3)$ gelegenen Geländepunkte berechnet.

In einem nachgeschalteten Flugwegfinder werden nun die insgesamt drei Differenzen der im Feinanalysator berechneten Mittelwerte gebildet. Liegen alle drei Differenzen unterhalb eines vorgegebenen Grenzwertes G, so wird ein Kurskorrekturkommando gegeben, das zu einer Annäherung der Flugrichtung an die Richtung des zuvor im Grobanalysator bestimmten Segmentes mit dem geringsten Mittelwert führt. Ist dagegen mindestens eine der drei Differenzen größer als der vorgegebene Grenzwert G, so wird der momentane Flugkurs danach bestimmt, in welchem der drei Segmente $s_j$ des zweiten Fächers $f_1$ der geringste Mittelwert vorliegt. Im vorliegenden, in Fig. 1 dargestellten Falle hat der Grobanalysator den Sektor $S_4$ ermittelt. Die Differenzbildung der im Feinanalysator berechneten Mittelwerte durch den Flugwegfinder hat zu dem Ergebnis geführt, daß beim Fächer $f_1$ mindestens eine der Differenzen den Grenzwert G überschreitet. Da zudem der Mittelwert im Sektor $s_1$ am geringsten ist, erfolgt eine Kurskorrektur nach links, siehe den von $P_1$ nach $P_2$ führenden Flugweg W. Bei Erreichen der momentanen Flugposition $P_2$ bzw. nach dem Verstreichen eines Zeitintervalls $\Delta t$ wird vom Feinanalysator ein neuer zweiter Fächer $f_2$ ausgewählt, dessen Mittenrichtung nun in die neue, bei der Flugposition $P_2$ vorliegende momentane Flugrichtung weist. Die Berechnung der Mittelwerte für die drei Sektoren $S_j$ sowie der Vergleich der drei aus diesen gebildeten Differenzen im Flugwegfinder ergibt in diesem Falle, daß keine der drei Differenzen den Grenzwert G übersteigt. Jetzt erfolgt ein Kurskorrekturkommando zur Annäherung an die Flugrichtung, die dem zuvor im Grobanalysator bestimmten Segment $S_4$ entspricht. Dies bedeutet für die Flugposition $P_2$ eine Rechtskurve. Nach Verstreichen eines weiteren Zeitintervalls $\Delta t$ wird die Flugposition $P_3$ erreicht, wo der Feinanalysator erneut einen zweiten Fächer $f_3$ über die Punktmenge des digitalen Geländehöhenmodells legt. Die Differenzbildung der arithmetischen Mittelwerte ergibt hier, daß der geringste Mittelwert im mittleren Sektor $s_2$ vorliegt, daß aber gleichzeitig mindestens eine der Differenzen den Grenzwert G übersteigt, so daß nun ein Geradeausflug erfolgt. Nach einem weiteren Zeitintervall $\Delta t$ ist die Flugposition $P_4$ erreicht, wo die entsprechenden Berechnungen zu dem Ergebnis führen, daß beim Fächer $f_4$ der geringste Mittelwert im linken Sektor $s_1$ vorliegt und mindestens eine der Differenzen den Grenzwert G übersteigt, so daß eine Linkskurve kommandiert wird. Bei der Flugposition $P_5$ ergibt die Auswertung innerhalb des entsprechenden zweiten Fächers $f_5$, daß keine der Differenzen den Grenzwert G übersteigt, so daß wiederum eine Rechtskurve kommandiert wird, in Übereinstimmung mit der Richtung des zuvor vom Grobanalysator im ersten Fächer $F_1$ bestimmten Sektor $S_4$. Bei der Flugposition $P_6$ ist nun das größere Zeitintervall $\Delta T$, in diesem Falle $\Delta T = 5$ $\Delta t$, verstrichen und mittels des Grobanalysators wird erneut ein erster Fächer $F_2$ über die Punktmenge des digitalen Geländehöhenmodells gelegt, gleichzeitig mit einem weiteren zweiten Fächer $f_6$. Die Mittenrichtung des ersten Fächers $F_2$ weist wieder in Richtung auf den Zielort $P_z$, die des zweiten Fächers $f_6$ in die momentane Flugrichtung. Alles weitere läuft nach den bereits beschriebenen Kriterien ab. Die Zeitintervalle $\Delta t$ können so klein gewählt werden, daß Auswahl und Auswertung der zweiten Fächer $f_m$ quasi kontinuierlich erfolgen.

Das Verfahren hat den hauptsächlichen Vorteil, daß es aufgrund der Verwendung eines Geländespeichers mit vorher eingespeichertem digitalem Geländehöhenmodell in der Lage ist, über Geländeerhebungen sozusagen hinwegzuschauen, was mit einem Bordradar nicht möglich ist. Außerdem ist bei der ausschließlichen Anwendung des Verfahrens ein Bordradar nicht erforderlich, welches ein zusätzliches Entdeckungsrisiko darstellt. Mit Hilfe der in größeren Zeitabständen $\Delta T$ auszuwertenden, zweiten, großen Fächer $F_n$ ist es möglich, einen weiterreichenden, vorausliegenden Geländebereich daraufhin zu untersuchen, in welcher Richtung das Gelände im Mittel am niedrigsten ist. Dies ist beim Ausführungsbeispiel der Fig. 1 für die Flugposition $P_1$ der Sektor $S_4$. Die in kürzeren Zeitabständen erfolgenden Auswertungen der zweiten, kleinen Fächer $f_m$) dient dazu, einen unmittelbar vorausliegenden, kleineren Flächenbereich daraufhin zu untersuchen, ob etwaige Bodenerhebungen, die bei der Auswertung der größeren Fächer $F_n$ in den Mittelwerten sogzusagen untergehen, noch zu umfliegen sind. Das darauf bezogene Kriterium ist der Vergleich zwischen den Differenzen der Mittelwerte der drei Sektoren mit dem vorgegebenen Grenzwert G. Übersteigt mindestens eine dieser Differenzen den Grenzwert G, so bedeutet dies, daß in dem entsprechenden zweiten, kleineren Fächer gewisse Geländeunebenheiten vorliegen, die ein vorgegebenes Maß überschreiten, so daß sich in diesem Falle eine kleinere Ausweichbewegung lohnt, deren Richtung nicht immer mit der durch den zuvor ausgewählten Sektor des großen Fächers $F_n$ gegebenen Richtung übereinstimmen muß. Sobald die relativen Geländehöhenunterschiede, repräsentiert durch die Differenzen der Mittelwerte der drei Sektoren, innerhalb des unmittelbar vorausliegenden, zweiten, kleineren Fächers geringer sind als es dem Grenzwert G entspricht, wird der Flugkurs nicht mehr durch die Mittelwerte der Sektoren der kleineren Fächer bestimmt, sondern durch die Richtung des ausgewählten Sektors des zuvor untersuchten großen Fächers. So wird das Flugzeug immer wieder in Richtung auf den Zielort $P_z$ hin gelenkt.

Das Verfahren bietet einige Möglichkeiten zur Anpassung an das zu erwartende Gelände, eine sich ändernde Fluggeschwindigkeit sowie zunehmende Zielortnähe. So kann der Grenzwert G mit zunehmender Unebenheit des zu erwartenden Geländes vergrößert werden. Es können z.B. drei verschiedene Grenzwerte G vorgesehen sein, ein relativ kleiner für nahezu ebenes Gelände, ein höherer für hügeliges Gelände sowie ein relativ höchster für bergiges Gelände. Die Zeitintervalle $\Delta T$ und $\Delta t$ können mit zunehmender Fluggeschwindigkeit verkürzt werden. Dasselbe gilt bei zunehmender Annäherung an den Zielort $P_z$. Weiterhin ist es möglich, die Radien der ersten und zweiten Fächer $F_n$ bzw. $f_m$ mit zunehmender Fluggeschwindigkeit zu vergrößern.

Da ein Flug normalerweise bereits vor Flugbeginn am Boden genau geplant wird, kann das Verfahren anhand des vorliegenden digitalen Geländehöhenmodells mit entsprechenden Hardware-Komponenten bereits hier durchgespielt werden. So kann auch festgestellt werden, ob eventuelle Extremsituationen in der Art zu erwarten sind, daß der Flugweg aufgrund von Kurskorrekturen, die aus der Auswertung der zweiten, kleineren Fächer folgen, zu weit vom globalen Zielkurs wegführt. Dies könnte in Ausnahmefällen aufgrund extremer Geländeformationen der Fall sein. Dem kann auf verschiedene Weise begegnet werden. Einmal könnte ein "Kunstgelände" dadurch geschaffen werden, daß das digitale Geländehöhenmodell an den seitlichen Rändern des rechteckigen Geländeausschnittes mit künstlichen Mauern derart versehen wird, daß die natürlich vorgegebenen Geländehöhen datenmäßig so weit aufgestockt werden, daß bei Anwendung des Verfahrens hier immer ein Umlenken in Zielrichtung kommandiert wird. Eine weitere Möglichkeit besteht darin, den Grenzwert G zu den Seiten des Geländeausschnitts hin anwachsen zu lassen. Schließlich könnte noch die Positionsabweichung von der Verbindungsgeraden zwischen Startposition und Zielort ständig gemessen und dann ein Signal an den Piloten gegeben werden, wenn diese Abweichung ein vorgegebenes Maß überschreitet. Dann hat der Pilot zumindest kurzzeitig die Möglichkeit, auf ein anderes Lenkungsverfahren oder Handbetrieb umzuschalten.

Zur geländehöhenorientierten mathematischen Analyse der einzelnen Fächersektoren wird die Bildung des arithmetischen Mittelwertes der Höhenkoordinaten bevorzugt, der aufgrund seiner besonders einfachen mathematischen Ableitung eine gute Echtzeitverträglichkeit ergibt. Für die Mittelwertbildung sind jedoch auch andere Fälle denkbar. So kann es vorkommen, daß in zwei Segmenten zwar der gleiche arithmetische Mittelwert der Höhenkoordinaten vorliegt, die Höheninformationen sich jedoch deutlich unterscheiden. Im Extremfall wäre hier einmal an ein völlig ebenes, hochgelegenes Tal zu denken, welches sich in Segmentrichtung erstreckt, und zum anderen an eine ebenfalls in Segmentrichtung sich erstreckende, abwechselnd große Höhen und Tiefen aufweisende Geländeformation. In diesem Falle wären beide Segmente gleichberechtigt, wenn lediglich der arithmetische Mittelwert gebildet und ausgewertet wird. In Wirklichkeit wäre jedoch das zuerst genannte Segment (ebenes Hochtal) zu bevorzugen, da dort eine wesentlich niedrigere mittlere Höhe über Grund eingehalten werden könnte. Bei der zweiten genannten Geländeformation hingegen würde sich eine wesentlich größere mittlere Höhe über Grund ergeben, außerdem wäre das Flugzeug beim überfliegen der Berggipfel stark gefährdet, da es einer im nächsten Tal postierten gegnerischen Stellung nicht entgehen könnte. Beim Durchfliegen des Hochtales hingegen würde sich das Flugzeug ständig dicht über dem Boden bewegen und könnte wegen der dort vorhandenen Radarechos von einem gegnerischen Radar nicht entdeckt werden. Hier wäre es also zweckmäßig, bei der Segmentauswahl nicht den arithmetischen Mittelwert heranzuziehen, sondern einen Mittelwert, der höhergelegene Geländepunkte stärker gewichtet als niedriger gelegene. Bei Verwendung eines derartigen Mittelwertes würde die Entscheidung zugunsten des ebenen Hochtales fallen, da dieser Mittelwert hier kleiner ist als bei dem anderen erwähnten Geländetyp. Als ein derartiger gewichtender Mittelwert käme beispielsweise das geometrische Mittel infrage. Eine weitere Möglichkeit, das Gelände innerhalb eines Segmentes neben der arithmetischen Mittelwertbildung einer genaueren Analyse zu unterziehen, besteht in der Berücksichtigung der jeweiligen Standardabweichung. Auch diese statistische Größe ist ein Maß dafür, wie häufig innerhalb des betrachteten Geländes Abweichungen vom Mittelwert auftreten. Daher kann die Auswahl des zu bevorzugenden Segmentes auch so getroffen werden, daß bei etwa gleichen Mittelwerten dasjenige mit der geringeren Standardabweichung ausgewählt wird, oder daß sogar ein Segment mit höherem Mittelwert, aber deutlich niedrigerer Standardabweichung einem solchen mit niedrigerem Mittelwert, aber deutlich höherer Standardabweichung vorgezogen wird.

Während bei den ersten, größeren Fächern die Anzahl der Segmente unterschiedlich gewählt werden kann, liegt die Segmentanzahl bei den zweiten, kleineren Fächern zweckmäßigerweise bei drei. Hier ist nur ein Geradeaus-, Links- oder Rechtskommando möglich, so daß mehr als drei Segmente keine Verbesserung bringen würden.

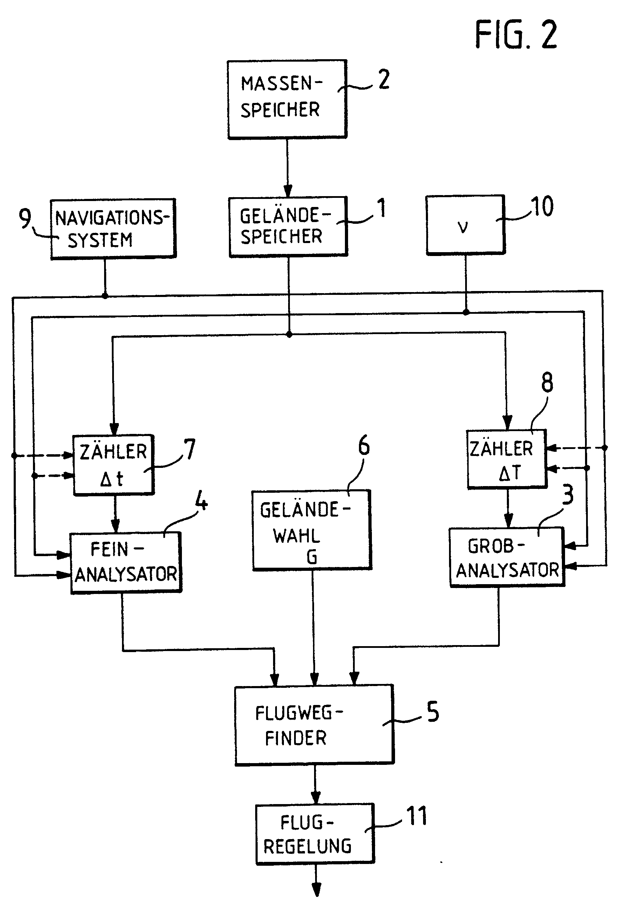

In Fig. 2 ist schematisch ein Blockschaltbild wiedergegeben. In einen Geländespeicher 1 wird vor Flug- bzw. Simulationsbeginn aus einem Massenspeicher 2, welcher die Geländedaten eines sehr großen Geländebereiches enthält, diejenigen Daten eingegeben, welche für den aktuellen Flug von Bedeutung sind. Ihr Datenbereich entspricht dem in Fig. 1 angedeuteten Rechteckbereich. Der Geländespeicher 1 enthält also ein dichtes Netz von Geländepunkten, repräsentiert durch seine Orts- und Höhenkoordinaten. Zähler 8 und 7 sorgen dafür, daß jeweils im Abstand von Zeitintervallen $\Delta T$ bzw. $\Delta t$ Geländedaten aus dem Geländespeicher 1 in den Grobanalysator 3 bzw. den Feinanalysator 4 eingelesen werden. Dabei werden, in Abhängigkeit von der jeweiligen Flugposition, Daten aus einem größeren oder kleineren Fächerbereich berücksichtigt, d.h. die Fächergröße ist variabel. Hierzu benötigen der Grob-sowie der Feinanalysator 3 bzw. 4 noch die jeweilige Flugposition, welche von einem Navigationssystem 9 geliefert wird. Weiterhin können die Fächer hinsichtlich ihres Radius noch von der Fluggeschwindigkeit v abhängen, welche von einem Geschwindigkeitsmesser 10 geliefert wird. Für die Bemessung der Zeitintervalle $\Delta t$ bzw. $\Delta T$ können auch Informationen des Navigationssystems 9 bzw. des Fluggeschwindigkeitsmessers 10 verwendet werden (gestrichelt dargestellt), so daß die Zeitintervalle mit zunehmender Annäherung an den Zielort bzw. mit zunehmender Fluggeschwindigkeit v verkürzt werden können. Im Grob- und Feinanalysator 3 bzw. 4 werden die oben geschilderten Berechnungen durchgeführt. Am Ausgang des Grobanalysators 3 steht dann gleich nach Beginn jedes Zeitintervalls $\Delta T$ ein Wert an, der die Richtung des ausgewählten Segmentes (beispielsweise $S_4$) mit dem geringsten Höhenmittelwert angibt. Entsprechend liefert der Feinanalysator 4 gleich nach Beginn jedes Zeitintervalls $\Delta t$ drei Werte, nämlich die Höhenmittelwerte der jeweiligen drei Segmente. Ein Geländewahlschalter 6 gibt einem nachgeschalteten Flugwegfinder 5 einen Grenzwert G vor, welcher die zu erwartende Geländestruktur repräsentiert. Weiterhin bildet der Flugwegfinder 5 aus den drei Mittelwerten des Feinanalysators 4 die drei Differenzen, vergleicht diese mit dem Grenzwert G und gibt an die nachfolgende Flugregelung 11 ein Kurskommando ab. Dieses richtet sich danach, ob mindestens eine der Differenzen größer als der vorgegebene Grenzwert G ist. Ist dies der Fall, so folgt das Kurskommando demjenigen der drei Segmente des entsprechenden zweiten, kleineren Fächers, in welchem der geringste Mittelwert vorliegt. Hieraus resultiert ein Geradeaus-, Links- oder Rechts-kommando. Sind alle drei Differenzen kleiner als der vorgegebene Grenzwert G, so wird zur Bildung des Kurskommandos der am Ausgang des Grobanalysators 3 anstehende Wert benutzt, so daß eine Annäherung an die Richtung erfolgt, die dem ausgewählten Segment des zuvor ausgewerteten ersten, größeren Fächers entspricht.

## Ansprüche

1. Tiefflugverfahren unter Verwendung eines Geländespeichers, in dem rasterartig verteilte Geländepunkte des interessierendes Geländes mit ihnen zugeordneten Höhenkoordinaten digital abgespeichert sind (digitales Geländehöhenmodell), **dadurch gekennzeichnet,** daß zur automatischen Kursbestimmung beim Anfliegen eines vorgegeben Zielortes

   - mittels eines Grobanalysators (3) im Abstand erster Zeitintervalle $\Delta T$ über die Punktmenge des digitalen Geländehöhenmodells ein von der jeweiligen momentanen Flugposition ($P_1$) ausgehender, mit seiner Mittenrichtung ($M_F$) auf den Zielort ($P_Z$) hin orientierter, aus mehreren benachbarten Segmenten ($S_i$) bestehender, erster Fächer ($F_n$) gelegt, für jedes Segment ($S_i$) ein Mittelwert der Höhenkoordinaten der in ihm gelegenen Geländepunkte berechnet und das Segment ($S_4$) mit dem geringsten Mittelwert bestimmt wird,

   - mittels eines Feinanalysators (4) innerhalb eines jeden der ersten Zeitintervalle $\Delta T$ mehrfach hintereinander im Abstand vergleichsweise kürzerer, zweiter Zeitintervalle $\Delta t$ über die Punktmenge des digitalen Geländehöhenmodells jeweils ein von der momentanen Flugposition ($P_1$, $P_2$ usw.) ausgehender, mit seiner Mittenrichtung ($M_{fm}$) in die momentane Flugrichtung orientierter, aus drei benachbarten Segmenten ($s_j$) bestehender, zweiter Fächer ($f_m$) mit im Vergleich zum ersten Fächer ($F_n$)geringerem Radius gelegt wird, für jedes Segment ($s_j$) ein Mittelwert der Höhenkoordinaten der in ihm gelegenen Geländepunkte berechnet wird.

   - sowie mittels eines Flugwegfinders (5) die drei Differenzen dieser Mittelwerte gebildet und jeweils mit einem vorgebbaren Grenzwert (G), der mit zunehmender Unebenhelt des zu erwartenden Geländes größer gewählt wird, verglichen werden, für den Fall, daß keine der drei Differenzen den Grenzwert (G) überschreitet, ein Kurskorrekturkommando zur Annäherung an die Flugrichtung gegeben wird, die dem zuvor im Grobanalysator(3) bestimmten Segment ($S_4$) entspricht, und für den Fall, daß mindestens eine der drei Differenzen den Grenzwert (G) überschreitet, der momentane Flugkurs danach bestimmt wird, in welchem der drei Segmente ($S_j$) der geringste Mittelwert vorliegt.

2. Tiefflugverfahren nach Anspruch 1, dadurch **gekennzeichnet,** daß für die Segmente ($S_i$, $S_j$) der ersten und/oder zweiten Fächer ($F_n$, $f_m$) jeweils der arithmetische Mittelwert gebildet wird.

3. Tiefflugverfahren nach Anspruch 1, dadurch **gekennzeichnet,** daß für die Segmente ($S_i$, $S_j$) der ersten und/oder zweiten Fächer ($F_n$, $f_m$) jeweils ein größere Höhen stärker gewichtender, beispielsweise ein geometrischer Mittelwert gebildet wird.

4. Tiefflugverfahren nach einem der vorhergehenden Ansprüche, dadurch **gekennzeichnet,** daß zusätzlich zu den Mittelwerten die innerhalb der jeweiligen Segmente ($S_i$, $S_j$) vorliegenden Standardabweichungen berücksichtigt werden.

5. Tiefflugverfahren nach einem der vorhergehenden Ansprüche, dadurch **gekennzeichnet,** daß die ersten und zweiten Zeitintervalle ($\Delta T$, $\Delta t$) mit zunehmender Annäherung an den Zielort ($P_z$) verkürzt werden.

6. Tiefflugverfahren nach einem der vorhergehenden Ansprüche, dadurch **gekennzeichnet,** daß die ersten und zweiten Zeitintervalle ($\Delta T$, $\Delta t$) mit zunehmender Fluggeschwindigkeit (v) verkürzt werden.

7. Tiefflugverfahren nach einem der vorhergehenden Ansprüche, dadurch **gekennzeichnet,** daß die Radien der ersten und zweiten Fächer ($F_n$, $f_m$) mit zunehmender Fluggeschwindigkeit (v) vergrößert werden.

8. Vorrichtung zur Durchführung des Tiefflugverfahrens nach Anspruch 1, mit einem Geländespeicher, in dem rasterartig verteilte Geländepunkte des interessierenden Geländes mit ihnen zugeordneten Höhenkoordinaten digital abgespeichert sind (digitales Geländehöhenmodell), **dadurch gekennzeichnet,** daß
- ferner ein Grobanalysator (3), ein Feinanalysator (4) sowie ein Flugwegfinder (5) vorhanden sind, wobei

- der Grobanalysator (3) dazu geeignet ist, im Abstand erster Zeitintervalle $\Delta T$ über die Punktmenge des digitalen Geländehöhenmodells einen von der jeweiligen momentanen Flugposition ($P_1$) ausgehenden, mit seiner Mittenrichtung ($M_F$) auf den Zielort ($P_Z$) hin orientierten, aus mehreren benachbarten Segmenten ($S_i$) bestehenden, ersten Fächer ($F_n$) zu legen, für jedes Segment ($S_i$) einen Mittelwert der Höhenkoordinaten der in ihm gelegenen Geländepunkte zu berechnen und das Segment ($S_4$) mit dem geringsten Mittelwert zu bestimmen,
- der Feinanalysator (4) dazu geeignet ist, innerhalb eines jeden der ersten Zeitintervalle $\Delta T$ mehrfach hintereinander im Abstand vergleichsweise kürzerer, zweiter Zeitintervalle $\Delta t$ über die Punktmenge des digitalen Geländehöhenmodells jeweils einen von der momentanen Flugposition ($P_1$, $P_2$ usw.) ausgehenden, mit seiner Mittenrichtung ($M_{fm}$) in die momentane Flugrichtung orientierten, aus drei benachbarten Segmenten ($s_j$) bestehenden, zweiten Fächer ($f_m$) mit im Vergleich zum ersten Fächer ($F_n$) geringerem Radius zu legen und für jedes Segment ($s_j$) einen Mittelwert der Höhenkoordinaten der in ihm gelegenen Geländepunkte zu berechnen,
- und der Flugwegfinder (5) dazu geeignet ist, die drei Differenzen dieser Mittelwerte zu bilden und jeweils mit einem vorgebbaren Grenzwert (G), der mit zunehmender Unebenheit des zu erwartenden Geländes größer gewählt wird, zu vergleichen und für den Fall, daß keine der drei Differenzen den Grenzwert (G) überschreitet, ein Kurskorrekturkommando zur Annäherung an die Flugrichtung zu geben, die dem zuvor im Grobanalysator (3) bestimmten Segment ($S_4$) entspricht, sowie für den Fall, daß mindestens einer der drei Differenzen den Grenzwert (G) überschreitet, den momentanen Flugkurs danach zu bestimmen, in welchem der drei Segmente ($s_j$) der geringste Mittelwert vorliegt.

## Claims

1. Low-flying method using a terrain memory, which digitally stores raster-like spaced terrain points of the terrain of interest along with their associated altitude coordinates (digital terrain-altitude model), characterised in that for the purpose of automatic course setting on approaching a given destination

- a first fan ($F_n$) is laid by means of a coarse analyser (3) at the space of first time-intervals $\Delta T$ over the spot quantity of the digital terrain-altitude model, which fax extends from the respective momentary flight position ($P_1$,), is oriented with its centre direction ($M_F$) towards the destination ($P_z$)' consists of several adjacent segments ($S_i$)' an average value of the altitude coordinates of terrain points therein being calculated for each segment ($S_i$)' and the segment ($S_4$) with the lowest average value being determined;

- a second fan ($f_m$)' which is of smaller radius compared with that of the first fan ($F_n$), is laid by means of a fine analyser (4) within second time intervals $\Delta T$, placed several times one behind the other at a comparably shorter distance within each of the first time-intervals $\Delta T$ over the spot quantity of the digital terrain-altitude model, which fan extends from the momentary flight position ($P_1$, $P_2$ etc.), is oriented with its centre direction ($M_f$ m) towards the momentary flight direction, consists of three adjacent segments ($s_j$), and an average value of the altitude coordinates of terrain points therein being calculated for each segment ($s_j$);

- and that the three differences in these average values are established by means of a flight-path finder (5) and are each compared with the preset threshold limit (G), which is chosen larger with increasing unevenness of the expected terrain, and in the event that none of the differences exceeds the threshold limit (G), a coursecorrection command to approach the flight direction is given which corresponds with the segment ($S_4$), which had earlier been determined in the coarse analyser (3), and in the event that at least one of the three differences exceeds the threshold limit (G), the momentary flight course is determined depending on which of the three segments ($S_j$) includes the lowest average values.

2. Low-flying method according to claim 1, characterised in that the respective arithmetical average value is established for the segments ($S_i$, $S_j$) of the first and/or second fans ($F_n$, $f_m$).

3. Low-flying method according to claim 1, characterised in that a respective higher altitude weighted average value, for example a geometrical one, is established for the segments ($S_i$, $S_j$) of the first and/or second fans ($F_n$, $f_m$).

4. Low-flying method according to one of the above claims, characterised in that standard deviations within the respective segments ($S_i$, $S_j$) are to be taken into consideration in addition to the average values.

5. Low-flying method according to one of the above claims, characterised in that the first and second time-intervals ($\Delta T$, $\Delta t$) are shortened whilst approaching the destination ($P_2$).

6. Low-flying method according to one of the above claims, characterised in that the first and second time-intervals ($\Delta T$, $\Delta t$) are shortened with increasing flight speed (v).

7. Low-flying method according to one of the above claims, characterised in that the radii of the first and second fans ($F_n$, $F_m$) are increased with increasing flight speed (v).

8. Apparatus for performing the low-flying method according to claim 1, including a terrain memory which digitally stores raster-like spaced terrain points of the terrain of interest along with their associated altitude coordinates (digital terrain-altitude model), characterised in that

- there is also a coarse analyser (3), a fine analyser (4) and a flight-path finder (5), in which respect

- the coarse analyser (3) is suitable for laying a first fan ($F_n$) at the space of first time-intervals $\Delta T$ over the spot quantity of the digital terrain-altitude model, which fan extends from the respective momentary flight position ($P_1$), is oriented with its centre direction ($M_F$) towards the destination ($P_2$), consists of several adjacent segments ($S_i$), for calculating an average value of the altitude coordinates of terrain point therein for each segment ($S_i$), and for determining the segment ($S_4$) with the lowest average value;

- the fine analyser (4) is suitable for laying a second fan ($f_m$)' which is of smaller radius compared with that of the first fan ($F_n$) within second time-intervals $\Delta T$, placed several times one behind the other at a comparably shorter distance within each of the first time-intervals $\Delta T$ over the spot quantity of the digital terrain-altitude model, which fan extends from the momentary flight position (P₁, P₂ etc.), is oriented with its centre direction (M_fm) towards the momentary flight direction, consists of three adjacent segments (s_j ), and for calculating an average value of the altitude coordinates of terrain points therein for each segment (s_j);

- and the flight-path finder (5) is suitable for establishing the three differences in these average values and comparing with the preset threshold limit (G), which is chosen larger with increasing unevenness of the expected terrain, and in the event that none of the differences exceeds the threshold limit (G), for giving a course-correction command to approach the flight direction, which corresponds with the segment (S₄) which had earlier been determined in the coarse analyser (3), and in the event that at least one of the three differences exceeds the threshold limit (G), for determining the momentary flight course depending on which of the three segments (sj) includes the lowest average value.

## Revendications

1. Procédé de vol à très basse altitude utilisant une mémoire de terrain, dans laquelle des points du terrain distribués en forme de réseau du terrain concerné sont stockés sous une forme numérique avec leurs coordonnées d'altitude associées (modèle altimétrique de terrain), caractérisé en ce que, pour la détermination automatique de la route lors de l'approche d'un objectif donné,

- une première grille-éventail (F_n), composée de plusieurs segments voisins (S_i), partant de la position de vol (P₁) momentanée correspondante, et orientée dans sa direction médiane (M_F) sur l'objectif (P_z), est placée à distance de premiers intervalles de temps ΔT sur l'ensemble des points du modèle altimétrique de terrain numérique à l'aide d'un analyseur grossier (3), pour chaque segment (S_i), la moyenne des coordonnées d'altitude des points du terrain situés dans le segment est calculée, et le segment (S₄) avec la moyenne la plus faible est déterminé,

- une deuxième grille-éventail (f_m) avec un rayon plus faible par rapport à celui de la première grille-éventail (F_n), composée de trois segments (S_j) voisins, partant chaque fois de la position de vol momentanée (P₁, P₂, etc), et orientée par sa direction médiane (M_fm) dans la direction de vol momentanée, est placée à distance d'intervalles de temps Δt comparativement plus courts, à l'intérieur de chacun des premiers intervalles de temps ΔT, sur l'ensemble des points du modèle altimétrique de terrain numérique au moyen d'un analyseur fin (4), pour chaque segment (S_j) une moyenne des coordonnées d'altitude des points de terrain situés à l'intérieur du segment est calculée,

- à l'aide d'un chercheur de route (5), les trois différences de ces valeurs moyennes sont formées, et comparées avec une valeur limite (G) donnée, qui est choisie d'autant plus grande que le relief du terrain à attendre augmente, dans le cas où aucune des trois différences ne dépasse la valeur limite (G), un ordre de correction de route est donné pour se rapprocher de la direction de vol qui correspond au segment (S₄) déterminé précédemment dans l'analyseur grossier (3), et dans le cas où l'une au moins des trois différences dépasse la valeur limite (G), la route momentanée est déterminée d'après celui des trois segments (S_j) qui présente la moyenne la plus faible.

2. Procédé de vol à très basse altitude selon la revendication 1, caractérisé en ce que pour les segments (S_i, S_j) de la première et/ou de la deuxième grille-éventail (F_n, f_m), la moyenne arithmétique est calculée.

3. Procédé de vol à très basse altitude selon la revendication 1, caractérisé en ce que pour les segments (S_i, S_j) de la première et/ou de la deuxième grille-éventail (F_n, f_m), une moyenne pondérant plus fortement les altitudes élevées, par exemple une moyenne géométrique, est calculée.

4. Procédé de vol à très basse altitude selon l'une des revendications précédentes, caractérisé en ce que, en plus des moyennes, les écarts-types apparaissant à l'intérieur des segments concernés (S_i, S_j) sont pris en compte.

5. Procédé de vol à très basse altitude selon l'une des revendications précédentes, caractérisé en ce que les premiers et deuxièmes intervalles de temps ΔT, Δt sont réduits au fur et à mesure que l'objectif (P_z) se rapproche.

6. Procédé de vol à très basse altitude selon l'une des revendications précédentes, caractérisé en ce que les premiers et deuxièmes intervalles de temps $\Delta T$, $\Delta t$ sont réduits au fur et à mesure que la vitesse de vol (v) augmente.

7. Procédé de vol à très basse altitude selon l'une des revendications précédentes, caractérisé en ce que les rayons des premières et deuxièmes grilles-éventails ($F_n$, $f_m$) sont augmentés au fur et à mesure que la vitesse de vol (v) augmente.

8. Dispositif pour l'application du procédé de vol à très basse altitude selon la revendication 1, comprenant une mémoire de terrain, à l'intérieur de laquelle des points du terrain distribués sous forme de réseau du terrain correspondant sont stockés sous une forme numérique avec leurs coordonnées d'altitude associées (modèle altimétrique de terrain numérique), caractérisé en ce que :
   - de plus un analyseur grossier (3), un analyseur fin (4) et un chercheur de route (5) sont prévus,
   - l'analyse grossier (3) sert à placer, à distance d'un premier intervalle de temps $\Delta T$, sur l'ensemble des points du modèle altimétrique de terrain numérique, une première grille-éventail ($F_n$), composée de plusieurs segments ($S_i$) voisins, partant de la position de vol ($P_1$) momentanée correspondante, et centrée par sa direction médiane ($M_F$) sur l'objectif ($P_z$), à calculer pour chaque segment ($S_i$) une moyenne des coordonnées d'altitude des points de terrain situés dans chaque segment, et à définir le segment ($S_4$) avec la moyenne la plus faible,
   - l'analyseur fin (4) sert à placer, à l'intérieur de chaque premier intervalle de temps $\Delta T$, à distance d'un deuxième intervalle de temps $\Delta t$ comparativement plus court, sur l'ensemble des points du modèle altimétrique de terrain numérique, une deuxième grille-éventail ($f_m$) ayant un rayon plus faible par rapport à la première grille-éventail ($F_n$), composée de trois segments ($S_j$) voisins, partant chaque fois de la position de vol ($P_1$, $P_2$, etc) momentanée, et orientée par sa direction médiane ($M_{f_m}$) dans la direction de vol momentanée, et à calculer pour chaque segment ($S_j$) une moyenne des coordonnées d'altitude des points de terrain situés dans le segment,
   - et le chercheur de route (5) sert à former les trois différences de ces valeurs moyennes, et à les comparer avec une valeur limite (G) donnée, qui est choisie d'autant plus grande que le relief du terrain à attendre augmente, et dans le cas où aucune des trois différences ne dépasse la valeur limite (G), à délivrer un ordre de correction de route pour se rapprocher de la direction de vol, qui correspond au segment ($S_4$) déterminé auparavant dans l'analyseur grossier (3), et dans le cas où l'une au moins des trois différences dépasse la valeur limite (G), à déterminer la route momentanée en fonction de celui des trois segments ($S_j$) qui présente la valeur moyenne la plus faible.

FIG.1

FIG. 2